# EUROPÄISCHE PATENTSCHRIFT

(11) **EP 3 945 007 B1**
(45) Veröffentlichungstag und Bekanntmachung des Hinweises auf die Patenterteilung: **04.06.2025**
(21) Anmeldenummer: 21186565.4
(22) Anmeldetag: 20.07.2021
(51) Int. Cl.: B62D 25/08, B62D 55/253, B62D 55/26

(54) **KETTENSTEGANORDNUNG FÜR EINE LAUFWERKSKETTE EINES KETTENFAHRZEUGS**
CHAIN STUD ASSEMBLY FOR A DRIVE CHAIN OF A TRACKED VEHICLE
AGENCEMENT D'ÉTAI POUR UNE CHENILLE D'ENTRAÎNEMENT D'UN VÉHICULE À CHENILLES

(30) Priorität: 27.07.2020 DE 102020209419
(43) Veröffentlichungstag der Anmeldung: 02.02.2022
(73) Patentinhaber: Kässbohrer Geländefahrzeug AG, 88471 Laupheim (DE)
(72) Erfinder: Bendele, Tobias, 89129 Nerenstetten (DE)
(74) Vertreter: Patentanwälte Ruff, Wilhelm, Beier, Dauster & Partner mbB

(56) Entgegenhaltungen:
- EP-A1- 2 778 026
- EP-A1- 3 081 462
- EP-A1- 3 798 108
- DE-A1- 102013 204 627
- DE-U1- 9 303 466

## Beschreibung

Die Erfindung betrifft eine Kettensteganordnung für eine Laufwerkskette eines Kettenfahrzeugs, insbesondere einer Pistenraupe, mit einem Kettensteg, sowie mit einem an dem Kettensteg befestigten Spurbügel.

Eine derartige Kettensteganordnung für eine Laufwerkskette einer Pistenraupe ist aus der DE 10 2013 204 627 A1 bekannt. Die Kettensteganordnung weist einen Kettensteg sowie einen Spurbügel auf, der mit einer zu einem Ketteninneren gewandten Unterseite des Kettenstegs verschraubt ist.

Aus der DE 103 20 523 A1 ist eine Laufwerkskette für ein Kettenfahrzeug in Form einer Pistenraupe bekannt. Die Laufwerkskette weist eine Vielzahl von Kettensteganordnungen auf, die quer zu einer Kettenlaufrichtung in gleichmäßigen Abständen auf mehreren parallel zueinander in Kettenlaufrichtung erstreckten Kettenbändern befestigt sind. Jede Kettensteganordnung weist einen nach außen weisenden Kettensteg sowie einen nach innen weisenden Spurbügel auf. Die Spurbügel der Kettensteganordnungen dienen dazu, die Laufwerkskette in Kettenlaufrichtung über ein endseitiges Triebrad sowie über ein gegenüberliegend endseitiges Spannrad und über mehrere Laufräder zu führen, die Teile des Kettenlaufwerks bilden. Jeder Spurbügel ist an dem zugehörigen Kettensteg mithilfe von Schraubverbindungen befestigt.

Aufgabe der Erfindung ist es, eine Kettensteganordnung der eingangs genannten Art zu schaffen, die gegenüber dem Stand der Technik eine erhöhte Haltbarkeit aufweist.

Diese Aufgabe wird dadurch gelöst, dass der Spurbügel ausschließlich durch Verklebung an dem Kettensteg befestigt ist, und dass der Spurbügel über eine Kontaktfläche mit dem Kettensteg verklebt ist, die mit einer Außenkontur des Kettenstegs einen im Querschnitt U-artigen Klebespalt definiert, der über eine gesamte Länge des Spurbügels - in Längsrichtung des Kettenstegs gesehen - erstreckt ist.

Der Spurbügel besteht vorzugsweise aus Stahl und der Kettensteg aus einer Aluminiumlegierung. Ein geeigneter Klebstoff zur Verklebung eines solchen Spurbügels mit dem Kettensteg gewährleistet, dass der Spurbügel nicht steif mit dem Kettensteg verbunden ist, sondern vielmehr über eine gesamte Verklebungsfläche geringfügig elastisch mit dem Kettensteg verbunden ist. Diese gewisse Elastizität ermöglicht eine gleichbleibende Verbindung zwischen Spurbügel und Kettensteg auch in einem Fahrbetrieb eines mit einer solchen Kettensteganordnung versehenen Kettenfahrzeugs. Denn durch die Verklebung werden Spannungsspitzen aufgrund auftretender Biegungen im Fahrbetrieb vermieden. Bei bekannten Verschraubungen des Spurbügels am Kettensteg hingegen führt im Fahrbetrieb die geringe Durchbiegung des Kettenstegs zu Scherbeanspruchungen in den Schraubverbindungen, wodurch die jeweils verschraubten Partner der jeweiligen Schraubverbindung gegeneinander bewegt werden, was ein Lösen der jeweiligen Schraubverbindung zur Folge hat. Maßgeblich für die erfindungsgemäße Lösung ist es, dass der Spurbügel ausschließlich über einen geeigneten Klebstoff mit dem Kettensteg verbunden ist und keine zusätzliche Schraubverbindung vorhanden ist. Die Verklebung gewährleistet, dass im Fahrbetrieb eines Kettenfahrzeugs keine Überlastungen im Verbindungsbereich zwischen Spurbügel und Kettensteg auftreten. Die erfindungsgemäße Lösung eignet sich auch für Kettensteganordnungen, deren Teile wie insbesondere Kettensteg und Spurbügel aus anderen metallischen Materialien oder aus nichtmetallischen Materialien hergestellt sind. So ist es insbesondere möglich, den Spurbügel aus Kunststoff herzustellen und den Kettensteg aus Metall. Auch die Herstellung sowohl des Kettenstegs als auch des Spurbügels aus einem nichtmetallischen Werkstoff fällt unter die erfindungsgemäße Lösung. Besonders große Vorteile hat die erfindungsgemäße Lösung allerdings für eine Kettensteganordnung, bei der sowohl der Kettensteg als auch der Spurbügel aus einem metallischen Werkstoff hergestellt sind. Die erfindungsgemäße Lösung ist in besonders vorteilhafter Weise einsetzbar für eine Pistenraupe, die zur Pflege und zur Gestaltung von Schneegelände vorgesehen ist und hierzu front- und heckseitige Anbaugeräte aufweist. Für eine Kettensteganordnung einer Pistenraupe, bei der sowohl der Kettensteg als auch der Spurbügel aus einem metallischen Werkstoff hergestellt sind, eignet sich in vorteilhafter Weise ein einkomponentiger, feuchtigkeitsreaktiver Polyurethan-Klebstoff, der eine gute Haftung, ein hohes Stehvermögen und eine hohe Elastizität aufweist. Ein solcher Klebstoff ist insbesondere unter der Produktbezeichnung EFBOND DA 183A der Firma EFTEC AG, Schweiz, bekannt, der im Fahrzeugbau zusammen mit entsprechenden Primern zur Scheibenverklebung verwendet wird. Alternativ kann als geeigneter Klebstoff ein Zweikomponentenklebstoff eingesetzt werden, der in ausgehärtetem Zustand eine ausreichende Elastizität aufweist.

Erfindungsgemäß ist der Spurbügel über eine Kontaktfläche mit dem Kettensteg verklebt, die sich im Querschnitt U-förmig um einen Kettenstegboden des Kettenstegs herum erstreckt. Die dreidimensionale Kontaktfläche definiert gemeinsam mit entsprechenden Außenkonturflächen des Kettenstegbodens einen zumindest weitgehend gleichbleibenden Klebespalt über eine gesamte Verklebungsfläche zwischen dem Spurbügel und dem Kettensteg. Dadurch, dass die Kontaktfläche nicht nur entlang einer Unterseite des Kettenstegbodens, sondern auch U-förmig zu gegenüberliegenden Seitenflächen des Kettenstegbodens hochgezogen ist, ergibt sich eine besonders vorteilhafte Kraftübertragung zwischen Spurbügel und Kettensteg. Denn unabhängig von der entsprechenden Belastungsrichtung werden durch den zwangsläufig ebenfalls U-förmig den Kettenstegboden umgebenden Klebespalt ausschließlich Scherbelastungen übertragen, die der Klebstoff aufgrund der gleichmäßigen und flächigen Verteilung im Klebespalt besonders gut aufnehmen kann.

In Ausgestaltung der Erfindung ist der Spurbügel im Bereich seiner Kontaktfläche mit wenigstens einer Längsprofilierung versehen. Die wenigstens eine Längsprofilierung weist Oberflächen auf, die sich parallel zu entsprechend komplementären Außenkonturflächen des Kettenstegbodens an dessen Unterseite sowie an dessen gegenüberliegenden Außenseiten erstrecken. Die wenigstens eine Längsprofilierung begünstigt eine gute Klebstoffverteilung.

In weiterer Ausgestaltung der Erfindung bildet die Längsprofilierung eine ebene und flächige Anlage zu einer Außenkontur des Kettenstegs. Die Längsprofilierung bildet demzufolge eine sichere Ausrichtung relativ zu dem Kettenstegboden des Kettenstegs sowie die Möglichkeit einer sicheren und stabilen Vormontage des Spurbügels am Kettensteg. Die Längsprofilierung bildet durch die ebene und flächige Anlage eine mechanische Abstützung am Kettenstegboden und demzufolge eine stabile Ausrichtung in einer Vormontagestellung vor Einbringung des Klebstoffs.

In weiterer Ausgestaltung der Erfindung weist die Kontaktfläche wenigstens eine Auswölbung auf, die im Bereich der wenigstens einen Längsprofilierung vorgesehen ist. Die Auswölbung unterbricht die ebene und flächige Längsprofilierung und bildet bei der Klebstoffeinbringung einen Ausweichraum, der die Verteilung des flüssigen oder fließfähigen Klebstoffs weiter verbessert.

In weiterer Ausgestaltung der Erfindung ist wenigstens ein Abstandssteg jeweils an gegenüberliegenden Seitenflächenbereichen der Kontaktfläche vorgesehen, der über eine gesamte Länge der Kontaktfläche durchgängig erstreckt ist. Die Abstandsstege sind in vormontiertem Zustand an gegenüberliegenden Längsseiten des Kettenstegs positioniert und liegen an diesen Außenkonturflächen des Kettenstegs an, um eine stabile Ausrichtung des Spurbügels relativ zum Kettensteg und eine sichere Vormontagestellung des Spurbügels relativ zum Kettensteg vor Einbringung des Klebstoffs zu ermöglichen. Benachbart zu diesen Abstandsstegen verbleiben an dem Spurbügel entsprechende rinnen- oder kanalförmige Aussparungen, die den jeweiligen Klebespaltbereich definieren.

In weiterer Ausgestaltung der Erfindung grenzt der wenigstens eine Abstandssteg an den Klebespalt an und liegt zumindest weitgehend flächig und bündig an der Außenkontur des Kettenstegs an. Damit bilden die Abstandsstege Randabschlüsse für den Klebespalt, die verhindern, dass im Bereich der Abstandsstege Klebstoff bei der Einbringung nach außen austritt. Zudem ermöglicht die Anlage des Abstandsstegs an der Außenkontur eine stabile Abstützung in einer Vormontagestellung.

In weiterer Ausgestaltung der Erfindung ist in dem Spurbügel wenigstens ein Injektionskanal vorgesehen, der den Spurbügel von einer Außenseite her bis zu der Kontaktfläche durchsetzt, und der dazu ausgelegt ist, flüssigen oder fließfähigen Klebstoff in den Klebespalt zu injizieren. Damit ist es möglich, in einfacher Weise in einer Vormontagestellung, in der der Spurbügel mechanisch auf den Kettenstegboden aufgesteckt und provisorisch gesichert ist, entsprechenden flüssigen oder fließfähigen Klebstoff durch den Injektionskanal hindurch von außen her in den Klebespalt einzubringen.

In weiterer Ausgestaltung der Erfindung ist eine eingangsseitige Injektionsöffnung des Injektionskanals zumindest weitgehend mittig zwischen zwei seitlichen Führungshörnern des Spurbügels angeordnet. Die zumindest weitgehend mittige Ausrichtung ist relativ zu einer Längserstreckung des Spurbügels parallel zu einer Längsausrichtung des Kettenstegs zu verstehen.

In weiterer Ausgestaltung der Erfindung ist der wenigstens eine Injektionskanal in einem Winkel zwischen 0 ° und 45 ° zu einer Hochachse des Spurbügels erstreckt. Der genannte Winkelbereich schließt auch die Winkel 0 ° und 45 ° mit ein. Die Ausrichtung des wenigstens einen Injektionskanals ermöglicht ein Ansetzen eines Klebstoffinjektionswerkzeugs von oben her oder schräg von der Seite her.

In weiterer Ausgestaltung der Erfindung sind der Kettensteg und der Spurbügel aus unterschiedlichen Materialien hergestellt, insbesondere aus Stahl und einer Leichtmetalllegierung oder aus Kunststoff und einer Leichtmetalllegierung. Der Kunststoff kann faserverstärkt ausgeführt sein. Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Seitenansicht einer Ausführungsform einer erfindungsgemäßen Kettensteganordnung,
- Fig. 2: einen Längsschnitt durch die Kettensteganordnung nach Fig. 1,
- Fig. 3: in perspektivischer Darstellung einen Spurbügel für die Kettensteganordnung nach den Fig. 1 und 2,
- Fig. 4: eine Unterseite eines Spurbügels für eine Ausführungsform einer erfindungsgemäßen Kettensteganordnung ähnlich den Fig. 1 bis 3,
- Fig. 5: eine Draufsicht auf den Spurbügel nach Fig. 4,
- Fig. 6: einen Längsschnitt durch den Spurbügel gemäß Fig. 5 entlang der Schnittlinie VI-VI in Fig. 5,
- Fig. 7: eine stirnseitige Ansicht des Spurbügels nach den Fig. 4 bis 6,
- Fig. 8: einen Ausschnitt VIII in Fig. 7 in vergrößerter Darstellung,
- Fig. 9: eine Querschnittsdarstellung des Spurbügels nach Fig. 5 entlang der Schnittlinie IX-IX in Fig. 5 und
- Fig. 10: in einer Querschnittsdarstellung gemäß Fig. 9 eine weitere Ausführungsform eines Spurbügels mit unterschiedlich ausgerichteten Injektionskanälen, die analog des Spurbügels nach den Fig. 4 bis 9 bei einer entsprechenden Ausführungsform einer erfindungsgemäßen Kettensteganordnung einsetzbar ist.

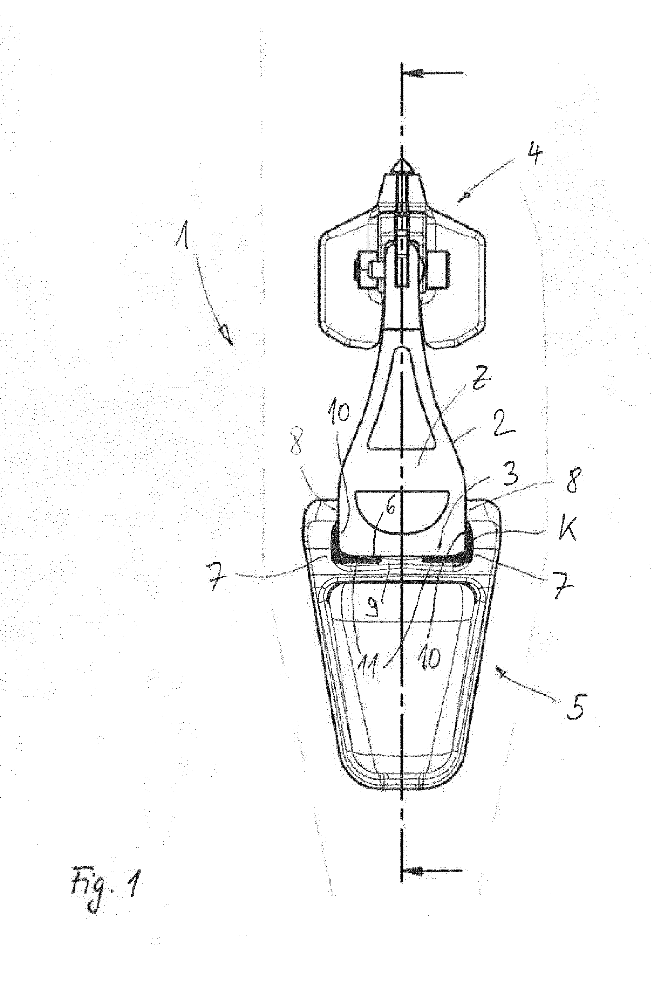

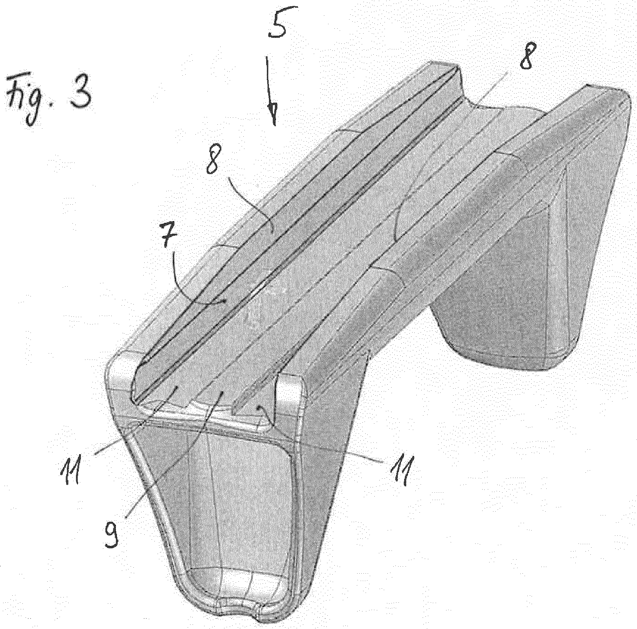

Ein Kettenfahrzeug in Form einer Pistenraupe weist in nicht näher dargestellter Weise ein Kettenlaufwerk auf, das als Fahrantrieb für die Pistenraupe fungiert. Das Kettenlaufwerk weist auf gegenüberliegenden Seiten eines Fahrzeugrahmens der Pistenraupe jeweils eine Laufwerkskette auf, die im Betrieb umlaufend um ein Turasrad, mehrere Laufräder sowie ein Spannrad herumgeführt ist. Jede Laufwerkskette weist mehrere in Kettenlaufrichtung erstreckte und parallel zueinander angeordnete Kettenbänder auf, die über eine Vielzahl von Kettensteganordnungen 1 quer zur Kettenlaufrichtung miteinander verbunden sind. Jede dieser Kettensteganordnungen 1 oder zumindest ein Teil der Kettensteganordnungen 1 für die Laufwerkskette ist entsprechend der Fig. 1 bis 3 gestaltet. Jede Kettensteganordnung 1 weist einen aus einer Aluminiumlegierung hergestellten Kettensteg 2 auf, der sich im betriebsfertig montierten Zustand der Laufwerkskette quer zur Kettenlaufrichtung über mehrere Kettenbänder hinweg erstreckt und mit diesen Kettenbändern verbunden ist. Jedes Kettenband ist ein Kautschukband, das vorzugsweise durch Gewebeeinlagen verstärkt ist.

Der Kettensteg 2 weist einen keilartigen Querschnitt auf. Im Bereich einer Spitze des Kettenstegs 2 sind Zusatzteile 4 an dem Kettensteg 2 befestigt. Vorliegend werden die Zusatzteile 4 durch eine Verschleißschiene und mehrere Bestückungskörper für die Verschleißschiene und den Kettensteg gebildet. Die Bestückungskörper haben Eisgreifer- und Seitenführungsfunktionen.

Gegenüberliegend zu der Spitze des Kettenstegs 2 weist der Kettensteg 2 einen Kettenstegboden 3 auf, der eine im Wesentlichen ebene Bodenseite 6 sowie zwei im Wesentlichen ebene und orthogonal zu der Bodenseite 6 ausgerichtete seitliche Außenflächen 10 aufweist.

An dem Kettensteg 2 ist ein Spurbügel 5 in nachfolgend näher beschriebener Weise befestigt, der aus Stahl hergestellt ist. Der Spurbügel 5 ist - in Längsrichtung des Kettenstegs 2 gesehen - mittig an dem Kettensteg 2 angeordnet. Der Spurbügel 5 weist zwei nicht näher bezeichnete, seitliche Führungshörner auf, die in montiertem Zustand des Spurbügels 5 am Kettensteg 2 entgegengerichtet zu der Spitze des Kettenstegs 2 von dem Kettenstegboden 3 wegragen. Zudem ist der Spurbügel 5 mit einem Befestigungsbereich versehen, der einen dem Kettenstegboden 3 zugewandten Abschnitt des Kettenstegs 2 unterseitig und außenseitig U-förmig umgreift. Dieser Befestigungsbereich ist über eine gesamte Länge des Spurbügels 5 nach Art eines zum Kettensteg 2 hin offenen Kanals ausgespart. Beim dargestellten Ausführungsbeispiel wird der Befestigungsbereich dadurch gebildet, dass dieser Bereich bei der Herstellung des Spurbügels 5 ausgefräst wird. Der Befestigungsbereich wird auch als Kontaktfläche bezeichnet.

Wie anhand der Fig. 1 bis 3 erkennbar ist, sind in dem kanalartigen Befestigungsbereich, dessen bodenseitige sowie dessen seitliche Oberflächen die Kontaktfläche im Sinne der Erfindung ergeben, insgesamt zwei Abstandsstege 8 sowie eine Längsprofilierung 9 vorgesehen, die an der Bodenseite 6 sowie an den Außenflächen 10 des Kettenstegs 2 abgestützt sind. Zwischen den Abstandsstegen 8 und der Längsprofilierung 9 sind vertiefte Klebstoffkanäle 7 und 11 vorgesehen, deren Bodenflächen sich jeweils als ebene Flächen über eine gesamte Länge des Spurbügels 5 durchgängig erstrecken und die im Wesentlichen parallel zu den Außenkonturen (der Bodenseite 6 und den Außenflächen 10) des den Kettenstegboden 3 umfassenden Abschnitts des Kettenstegs 2 ausgerichtet sind. Hierdurch ergibt sich zwischen jeweils einem seitlichen Abstandssteg 8 und der zentralen Längsprofilierung 9 des Befestigungsbereichs des Spurbügels 5 ein Klebstoffraum, der mit einem geeigneten Klebstoff ausgefüllt wird. Dieser Klebstoffraum definiert demzufolge einen Klebespalt zwischen der Kontaktfläche des Spurbügels 5 und der Außenkontur des Kettenstegs 2 im Bereich des Kettenstegbodens 3.

Anhand der Fig. 1 ist erkennbar, dass der Spurbügel 5 mit seinen Seitenbereichen bis nahezu auf Höhe eines Zwischenstegs Z des Kettenstegs 2 seitlich an den Außenflächen 10 des Kettenstegs 2 hochgezogen ist. Der Kettenstegboden 3 im Sinne der Erfindung bildet demzufolge den Abschnitt des Kettenstegs 2, der außenseitig von der Bodenseite 6 aus bis zu einem unteren Randbereich des Zwischenstegs Z geführt ist. Der Zwischensteg Z ist parallel zum Kettenstegboden 3 erstreckt.

Anhand der Fig. 1 ist erkennbar, wie ein geeigneter Klebstoff K den Klebstoffraum zwischen der Kontaktfläche des Befestigungsbereichs des Spurbügels 5 und den Außenflächen des Kettenstegbodens 3 flächig und stoffschlüssig umschließt. Der Klebstoff K ist über eine gesamte Länge des Befestigungsbereichs des Spurbügels 5 durchgängig stoffschlüssig mit der Kontaktfläche des Spurbügels 5 einerseits und der Bodenseite 6 sowie den Außenflächen 10 des Kettenstegbodens 3 andererseits verbunden. Anhand der Fig. 1 ist erkennbar, dass der Klebstoff K an beiden Eckbereichen des Kettenstegbodens 3 in zwei V-artigen Rinnen verlaufen ist, die zur Mitte hin durch den mittleren Abstandssteg 9 und seitlich nach oben durch den jeweiligen seitlichen Abstandssteg 8 begrenzt sind. Der Klebstoff K kann - je nach Viskosität - in noch nicht ausgehärtetem Zustand zusätzlich auch in die Kontaktbereiche zwischen den Abstandsstegen 8 und der Längsprofilierung 9 und den entsprechenden Außenflächen des Kettenstegbodens 3 verlaufen. Die V-artigen Rinnenbereiche, in denen der Klebstoff K vorhanden ist, sind luftblasenfrei durch den Klebstoff K ausgefüllt, und zwar über die gesamte Länge des Spurbügels 5.

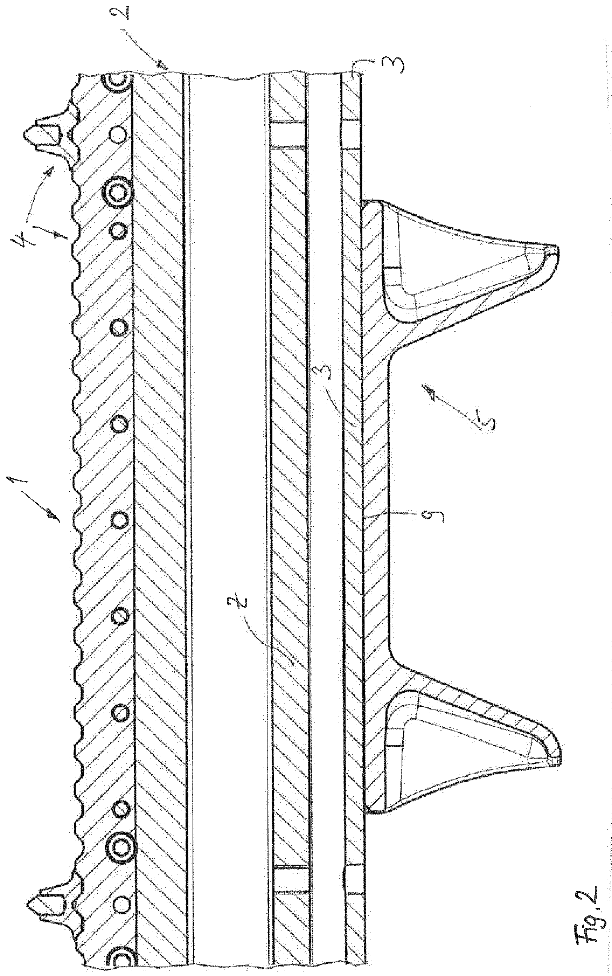

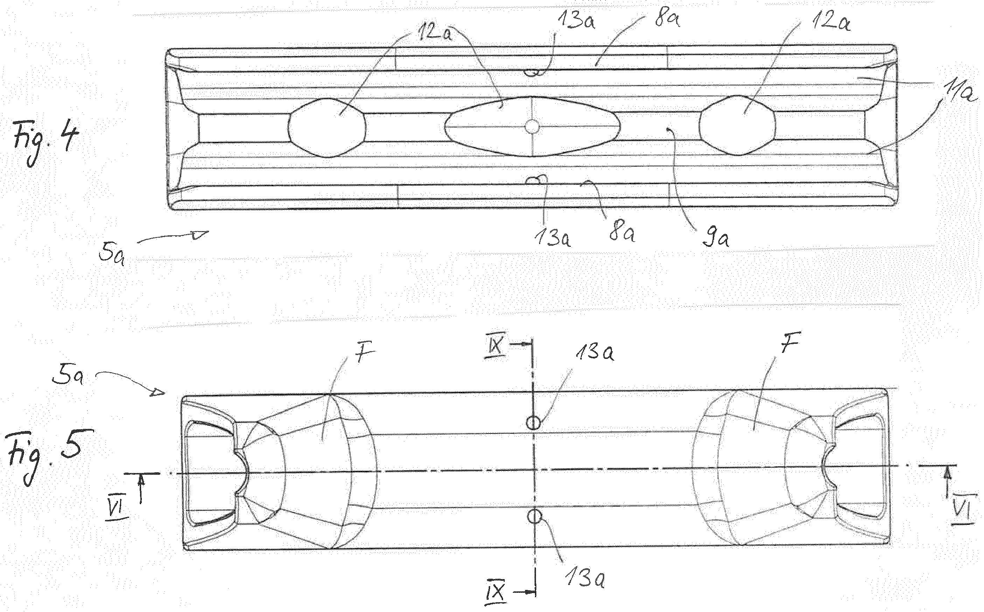

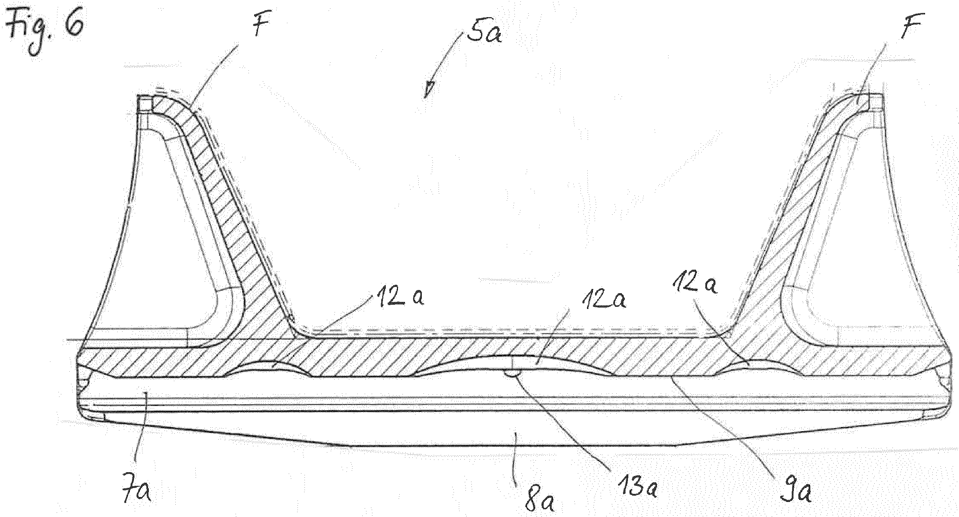

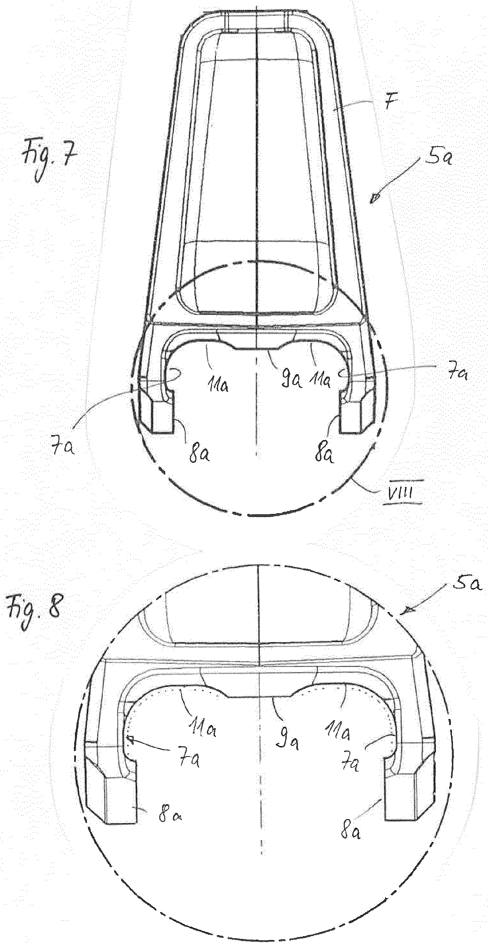

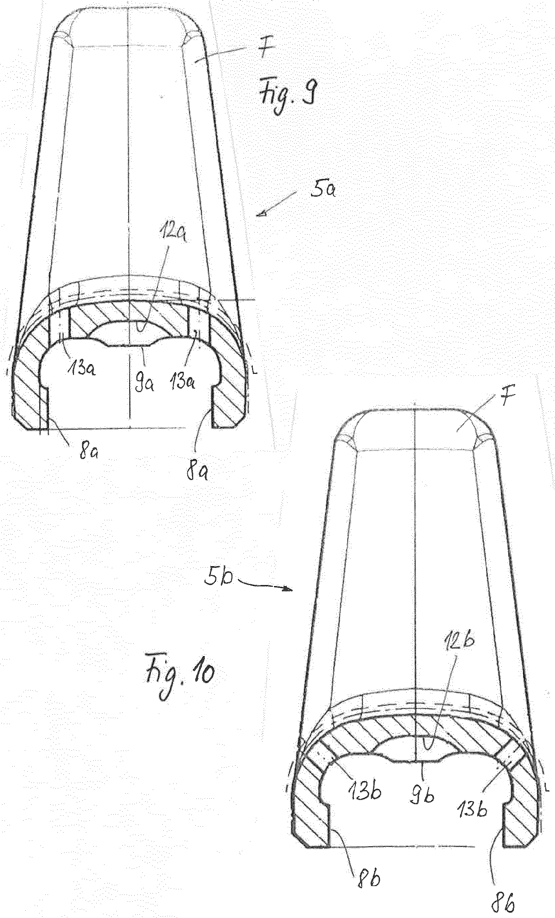

Ein Spurbügel 5a nach den Fig. 4 bis 9 wie auch ein Spurbügel 5b nach Fig. 10 sind alternativ zu dem Spurbügel 5 gemäß den Fig. 1 bis 3 zur Verklebung mit dem Kettensteg 2 gemäß Fig. 1 und 2 einsetzbar, um eine weitere Ausführungsform einer erfindungsgemäßen Kettensteganordnung zu erzielen. Zur Vermeidung von Wiederholungen wird demzufolge auf die Ausführungen zu der Kettensteganordnung 1 gemäß den Fig. 1 bis 3 ergänzend verwiesen. Zudem werden bei dem Spurbügel 5a wie auch bei dem Spurbügel 5b identische oder funktionsgleiche Abschnitte mit gleichen Bezugszeichen unter Hinzufügung des Buchstabens a beziehungsweise b versehen.

Der Spurbügel 5a weist analog dem Spurbügel 5 zwei seitliche Führungshörner F auf, die gemäß den Fig. 5 bis 7 und 9 im Bereich einer Oberseite des Spurbügels 5a angeordnet sind. Unterseitig ist der Spurbügel 5a analog der zuvor beschriebenen Ausführungsform ebenfalls mit zwei einander gegenüberliegenden, seitlichen Abstandsstegen 8a sowie an einem Grund der Kontaktfläche, die gemeinsam mit dem Kettenstegboden den Klebespalt bildet, mit einer Längsprofilierung 9a versehen. Die Längsprofilierung 9a ist mittig im Bereich der Kontaktfläche des Spurbügels 5a vorgesehen und erstreckt sich in Längsrichtung über nahezu eine gesamte Länge des Spurbügels 5a. Die Längsprofilierung 9a ist eben und flächig gestaltet, um eine bündige Anlage am Kettenstegboden zu ermöglichen. Die Längsprofilierung 9a ist unterbrochen durch eine mittige Auswölbung 12a sowie zwei von der Mitte aus in Längsrichtung versetzte, seitliche Auswölbungen 12a, wobei die seitlichen Auswölbungen, die zur mittigen Auswölbung 12a beabstandet sind, kleiner gestaltet sind als die mittige Auswölbung. Die Form und Positionierung der Auswölbungen 12a ist anhand der Fig. 4 und 6 sowie 9 gut erkennbar.

Der Spurbügel 5a ist mit zwei Injektionskanälen 13a versehen, die sich ausgehend von einer Oberseite des Spurbügels 5a mittig zwischen den beiden Führungshörnern F parallel zu einer Mittelhochachse nach unten erstrecken und im Bereich der längserstreckten Klebstoffkanäle 11a des Kleberaums münden. Die beiden Injektionskanäle 13a sind jeweils zylindrisch ausgeführt und nach oben sowie nach unten offen. Beide Injektionskanäle 13a sind spiegelsymmetrisch zu einer vertikalen Mittellängsebene des Spurbügels 5a jeweils nach außen versetzt in dem Spurbügel 5a vorgesehen. Die mittige Auswölbung 12a ist benachbart zwischen den beiden Injektionskanälen 13a positioniert.

Bei der Einbringung von flüssigem oder fließfähigem Klebstoff nach entsprechender Vorpositionierung des Spurbügels 5a relativ zu dem Kettensteg 2 und mechanischer, provisorischer Fixierung im Bereich des Kettenstegs wird der Klebstoff über ein entsprechendes Klebstoffinjektionswerkzeug von der Oberseite her in die Injektionskanäle 13a eingebracht und zumindest teilweise verläuft in dem Klebespalt und in die Auswölbungen 12a hinein.

Bei der Ausführungsform gemäß Fig. 10 ist der Spurbügel 5b weitgehend identisch gestaltet wie der zuvor anhand der Fig. 4 bis 9 beschriebene Spurbügel 5a. Zur Vermeidung von Wiederholungen wird daher ergänzend auf die Ausführungen zu dem Spurbügel 5a verwiesen. Funktionsgleiche oder identische Abschnitte des Spurbügels 5b sind mit gleichen Bezugszeichen, jedoch unter Hinzufügung des Buchstabens b versehen. Der Spurbügel 5b ist in gleicher Weise alternativ zu dem Spurbügel 5 mit dem Kettensteg 2 der Kettensteganordnung 1 gemäß Fig. 1 verbindbar, so dass auch das insoweit zu der Kettensteganordnung 1 Gesagte für die mit dem Spurbügel 5b versehene Variante einer Kettensteganordnung gilt.

Wesentlicher Unterschied bei dem Spurbügel 5b gemäß Fig. 10 relativ zu dem Spurbügel 5a gemäß den Fig. 4 bis 9 ist es, dass die beiden Injektionskanäle 13b nicht parallel zu einer vertikalen Mittelhochachse, sondern vielmehr in einem Winkel von jeweils 45 ° relativ zu der vertikalen Mittelhochachse in dem Spurbügel 5b ausgerichtet sind. Im Übrigen sind Anordnung und Aufbau der Injektionskanäle 13b identisch gestaltet wie Anordnung und Aufbau der Injektionskanäle 13a des Spurbügels 5a. Eine entsprechende Injektion von flüssigem oder fließfähigem Klebstoff erfolgt demzufolge schräg von oben und von außen in einem Winkel von 45° zu einer vertikalen Mittellängsebene und damit zu der vertikalen Mittelhochachse des Spurbügels 5b.

## Patentansprüche

1. Kettensteganordnung (1) für eine Laufwerkskette eines Kettenfahrzeugs, insbesondere einer Pistenraupe, mit einem Kettensteg (2), sowie mit einem an dem Kettensteg (2) befestigten Spurbügel (5, 5a, 5b), **dadurch gekennzeichnet, dass** der Spurbügel (5, 5a, 5b) ausschließlich durch Verklebung an dem Kettensteg (2) befestigt ist, und dass der Spurbügel (5, 5a, 5b) über eine Kontaktfläche mit dem Kettensteg (2) verklebt ist, die mit einer Außenkontur des Kettenstegs (2) einen im Querschnitt U-artigen Klebespalt definiert, der über eine gesamte Länge des Spurbügels (5, 5a, 5b) - in Längsrichtung des Kettenstegs (2) gesehen - erstreckt ist.

2. Kettensteganordnung (1) nach Anspruch 1, **dadurch gekennzeichnet, dass** der Spurbügel (5, 5a, 5b) im Bereich seiner Kontaktfläche mit wenigstens einer Längsprofilierung (9, 9a, 9b) versehen ist.

3. Kettensteganordnung (1) nach Anspruch 2, **dadurch gekennzeichnet, dass** die Längsprofilierung (9, 9a, 9b) eine ebene und flächige Anlage zu einer Außenkontur des Kettenstegs bildet.

4. Kettensteganordnung (1) nach Anspruch 3, **dadurch gekennzeichnet, dass** die Kontaktfläche wenigstens eine Auswölbung (12a, 12b) aufweist, die im Bereich der wenigstens einen Längsprofilierung (9a, 9b) vorgesehen ist.

5. Kettensteganordnung (1) nach einem der vorhergehenden Ansprüche, **dadurch gekennzeichnet, dass** wenigstens ein Abstandssteg (8, 8a, 8b) jeweils an gegenüberliegenden Seitenflächenbereichen der Kontaktfläche vorgesehen ist, der über eine gesamte Länge der Kontaktfläche durchgängig erstreckt ist.

6. Kettensteganordnung (1) nach Anspruch 5, **dadurch gekennzeichnet, dass** der wenigstens eine Abstandssteg (8, 8a, 8b) an den Klebespalt angrenzt und zumindest weitgehend flächig und bündig an der Außenkontur des Kettenstegs (2) anliegt.

7. Kettensteganordnung (1) nach einem der vorhergehenden Ansprüche, **dadurch gekennzeichnet, dass** in dem Spurbügel (5a, 5b) wenigstens ein Injektionskanal (13a, 13b) vorgesehen ist, der den Spurbügel (5a, 5b) von einer Außenseite her bis zu der Kontaktfläche durchsetzt, und der dazu ausgelegt ist, flüssigen oder fließfähigen Klebstoff in den Klebespalt zu injizieren.

8. Kettensteganordnung (1) nach Anspruch 7, **dadurch gekennzeichnet, dass** eine eingangsseitige Injektionsöffnung des Injektionskanals (13a, 13b) zumindest weitgehend mittig zwischen zwei seitlichen Führungshörnern (F) des Spurbügels (5a, 5b) angeordnet ist.

9. Kettensteganordnung (1) nach Anspruch 7 oder 8, **dadurch gekennzeichnet, dass** der wenigstens eine Injektionskanal (13a, 13b) in einem Winkel zwischen 0 ° und 45 ° zu einer Hochachse des Spurbügels (5a, 5b) erstreckt ist.

10. Kettensteganordnung (1) nach einem der vorhergehenden Ansprüche, **dadurch gekennzeichnet, dass** der Kettensteg (2) und der Spurbügel (5, 5a, 5b) aus unterschiedlichen Materialien hergestellt sind, insbesondere aus Stahl und einer Leichtmetalllegierung oder aus Kunststoff und einer Leichtmetalllegierung.

## Claims

1. A track cleat arrangement (1) for a drive chain of a tracked vehicle, in particular of a snow groomer, with a track cleat (2) and with a track guide (5, 5a, 5b) fastened to the track cleat (2), **characterized in that** the track guide (5, 5a, 5b) is fastened to the track cleat (2) exclusively by bonding, and **in that** the track guide (5, 5a, 5b) is bonded to the track cleat (2) by a contact surface which defines, with an outer contour of the track cleat (2), a bonding gap of U-shaped cross-section that extends over an entire length of the track guide (5, 5a, 5b) when viewed in the longitudinal direction of the track cleat (2).

2. The track cleat arrangement (1) according to claim 1, **characterized in that** the track guide (5, 5a, 5b) is provided with at least one longitudinal profile (9, 9a, 9b) in the region of its contact surface.

3. The track cleat arrangement (1) according to claim 2, **characterized in that** the longitudinal profile (9, 9a, 9b) forms an even and planar contact to an outer contour of the track cleat.

4. The track cleat arrangement (1) according to claim 3, **characterized in that** the contact surface has at least one outward bulge (12a, 12b) which is provided in the region of the at least one longitudinal profile (9a, 9b).

5. The track cleat arrangement (1) according to any of the preceding claims, **characterized in that** at least one spacer section (8, 8a, 8b), which extends continuously over an entire length of the contact surface, is provided on each opposite lateral surface region of the contact surface.

6. The track cleat arrangement (1) according to claim 5, **characterized in that** the at least one spacer section (8, 8a, 8b) borders on the bonding gap and is at least in largely planar and flush contact with the outer contour of the track cleat (2).

7. The track cleat arrangement (1) according to any of the preceding claims, **characterized in that** at least one injection duct (13a, 13b) is provided in the track guide (5a, 5b), passes through the track guide (5a, 5b) from an outer face up to the contact surface, and is designed to inject liquid or flowable adhesive into the bonding gap.

8. The track cleat arrangement (1) according to claim 7, **characterized in that** an input-side injection opening of the injection duct (13a, 13b) is arranged at least largely centrally between two lateral guide horns (F) of the track guide (5a, 5b).

9. The track cleat arrangement (1) according to claim 7 or 8, **characterized in that** the at least one injection duct (13a, 13b) extends at an angle of between 0 ° and 45 ° to a vertical axis of the track guide (5a, 5b).

10. The track cleat arrangement (1) according to any of the preceding claims, **characterized in that** the track cleat (2) and the track guide (5, 5a, 5b) are made of different materials, in particular of steel and a light metal alloy or of plastic and a light metal alloy.

## Revendications

1. Agencement d'étai (1) pour une chaîne de chenilles d'un véhicule à chenilles, notamment d'une dameuse, avec un étai (2), ainsi qu'avec un guide-roue (5, 5a, 5b) fixé à l'étai (2), **caractérisé en ce que** le guide-roue (5, 5a, 5b) est fixé à l'étai (2) uniquement par collage, et que le guide-roue (5, 5a, 5b) est collé à l'étai (2) via une surface de contact qui définit, avec un contour extérieur de l'étai (2), une fente de collage en forme de U en section, laquelle fente est étendue sur une longueur totale du guide-roue (5, 5a, 5b) - vu dans le sens longitudinal de l'étai (2).

2. Agencement d'étai (1) selon la revendication 1, **caractérisé en ce qu'**au niveau de sa surface de contact, le guide-roue (5, 5a, 5b) est pourvu d'au moins un profilage longitudinal (9, 9a, 9b).

3. Agencement d'étai (1) selon la revendication 2, **caractérisé en ce que** le profilage longitudinal (9, 9a, 9b) forme un appui plan et plat par rapport à un contour extérieur de l'étai.

4. Agencement d'étai (1) selon la revendication 3, **caractérisé en ce que** la surface de contact présente au moins une concavité (12a, 12b) qui est prévue au niveau dudit au moins un profilage longitudinal (9a, 9b).

5. Agencement d'étai (1) selon l'une des revendications précédentes, **caractérisé en ce qu'**au moins une nervure d'espacement (8, 8a, 8b) est prévue respectivement sur des zones latérales opposées de la surface de contact, laquelle nervure d'espacement est étendue en continu sur une longueur totale de la surface de contact.

6. Agencement d'étai (1) selon la revendication 5, **caractérisé en ce que** ladite au moins une nervure d'espacement (8, 8a, 8b) avoisine la fente de collage et repose au moins essentiellement à plat et à fleur sur le contour extérieur de l'étai (2).

7. Agencement d'étai (1) selon l'une des revendications précédentes, **caractérisé en ce qu'**est prévu dans le guide-roue (5a, 5b) au moins un canal d'injection (13a, 13b) qui perce le guide-roue (5a, 5b) depuis un côté extérieur jusqu'à la surface de contact, et qui est conçu pour injecter de la colle liquide ou fluide dans la fente de collage.

8. Agencement d'étai (1) selon la revendication 7, **caractérisé en ce qu'**un orifice d'injection du canal d'injection (13a, 13b), situé côté entrée est disposé au moins essentiellement au milieu de deux pointes de guidage (F) latérales du guide-roue (5a, 5b).

9. Agencement d'étai (1) selon la revendication 7 ou 8, **caractérisé en ce que** ledit au moins un canal d'injection (13a, 13b) est étendu dans un angle compris entre 0° et 45° par rapport à un axe vertical du guide-roue (5a, 5b).

10. Agencement d'étai (1) selon l'une des revendications précédentes, **caractérisé en ce que** l'étai (2) et le guide-roue (5, 5a, 5b) sont fabriqués dans différents matériaux, notamment dans de l'acier et un alliage métallique léger ou dans du plastique et un alliage métallique léger.
